(19) Europäisches Patentamt
European Patent Office
Office européen des brevets

(11) EP 0 600 541 B1

(12) EUROPEAN PATENT SPECIFICATION

(45) Date of publication and mention
of the grant of the patent:
**30.07.1997 Bulletin 1997/31**

(51) Int Cl.6: **G02F 1/135**, G02F 1/137

(21) Application number: **93203289.9**

(22) Date of filing: **24.11.1993**

(54) **Spatial light modulator**

Räumlicher Lichtmodulator

Modulateur spatial de lumière

(84) Designated Contracting States:
**DE FR GB**

(30) Priority: **25.11.1992 JP 338161/92**
           **28.01.1993 JP 32710/93**

(43) Date of publication of application:
**08.06.1994 Bulletin 1994/23**

(73) Proprietor: **VICTOR COMPANY OF JAPAN, LIMITED**
**Yokohama-Shi Kanagawa-Ken 221 (JP)**

(72) Inventors:
• **Eguchi, Toshiyasu**
  **Tsukuba-shi, Ibaraki-ken (JP)**
• **Shimizu, Shigeo**
  **Yokohama-shi, Kanagawa-ken (JP)**

(74) Representative:
**Smulders, Theodorus A.H.J., Ir. et al**
**Vereenigde Octrooibureaux**
**Nieuwe Parklaan 97**
**2587 BN 's-Gravenhage (NL)**

(56) References cited:
**WO-A-89/08862**          **GB-A- 227 853**
**US-A- 4 019 807**

• **JAPANESE JOURNAL OF APPLIED PHYSICS, vol. 29, no. 7, Part 2, July 1990, Tokyo JP, pp. L1231-L1234; T. SONEHARA : 'Photo-Addressed Liquid Crystal SLM with Twisted Nematic ECB (TN-ECB) Mode'**
• **MOLECULAR CRYSTALS AND LIQUID CRYSTALS, LETTERS - SERIES 2, vol. 127, no. 1/4, 1985, Reading GB, pp. 215-227; E. ANTOLINI et al.: 'Electro-Optics of the Hybrid Nematic Cell'**
• **APPLIED PHYSICS LETTERS, vol. 51, no. 15, October 1987, New York US, pp. 1197-1199; M.R. LEWIS : 'Hybrid Aligned Cholesteric : A Novel liquid-crystal alignment'**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

BACKGROUND OF THE INVENTION

Field of the Invention:

The present invention relates to a spatial light modulator having a photoconductive layer and a photomodulator layer and particularly relates to improvements of a spatial light modulator having a high speed response characteristic and suitable characteristics for projectors.

Description of the Related Art:

Presently, as a display device, there are typically two types, i.e., a direct viewing-type and a projection-type, and the latter is now utilized by employing a spatial light modulator having a liquid crystal as a photomodulator.

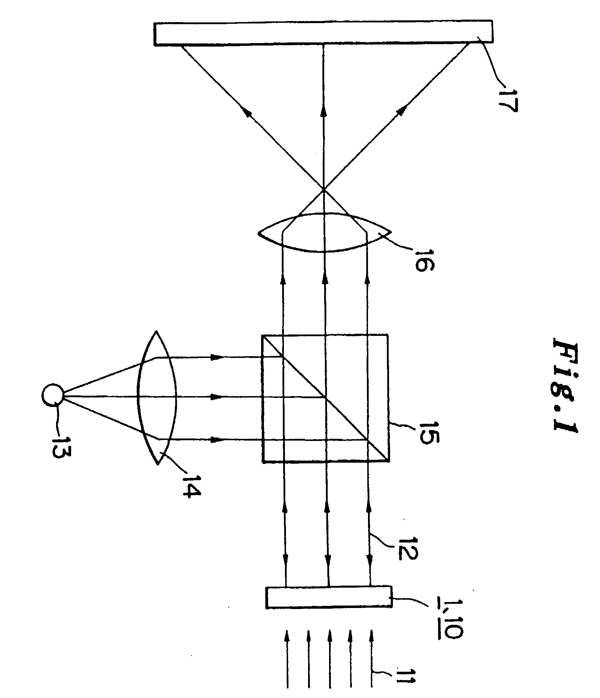

Fig. 1 is a diagram, partially pictorial and partially schematic, of a projector employing a spatial light modulator.

Referring to Fig. 1, an image information is written in a spatial light modulator 10 by a writing light 11 generated by a writing light system (not shown). On the other hand, after a light generated by a light source 13 is transformed to a parallel by a condenser lens 14, the parallel light impinges on a polarizing beam splitter 15. An S-polarized light component of the parallel light is reflected at a right angle by a joint surface (boundary pane) of the polarizing beam splitter 15 and impinges on a liquid crystal layer of the spatial light modulator 10 as a reading light 12. When the information image is written in the spatial light modulator 10, the reading light 12 reflected by the the spatial light modulator 10 contains a P-polarized light component by being modulated in the liquid crystal layer in accordance with the brightness and darkness gradation of the information image. The P-polarized light component of the reflected reading light 12 passes through the polarizing beam splitter 15 and projected on a screen 17 as the information image, i.e., the information image, written in the spatial light modulator 10 is projected on the screen 17.

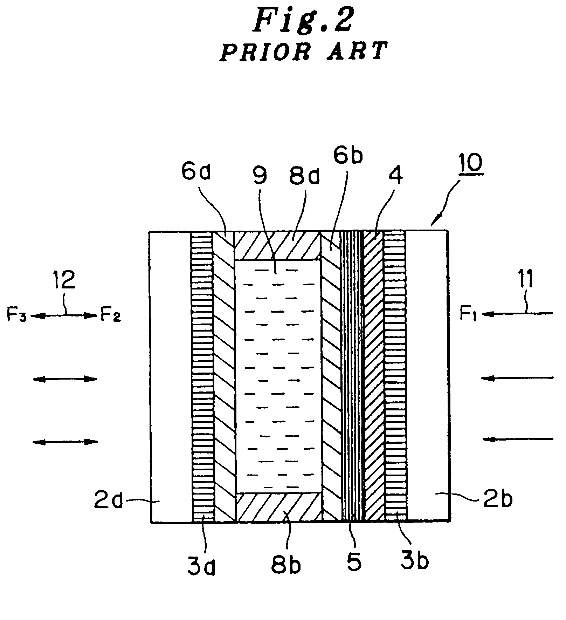

Fig. 2 is a cross-sectional view showing a spatial light modulator employed in a projector of the prior art.

Referring to Fig. 2, spacers 8a and 8b are provided to form a chamber for a liquid crystal layer 9, and liquid crystal aligning layers 6a, 6b are provided at respective sides of the liquid crystal layer 9. A reflecting layer 5 of dielectric material is provided on the outside of the aligning layer 6b and a photoconductive layer 4, for instance, being made of hydrogenerated amorphous silicon (a-Si: H). Transparent electrodes 3a, 3b, for instance, being made of $SnO_2$ or $In_2O_3$ are provided on the outsides of the alining layer 6a and the photoconductive layer 4. The overall spatial light modulator 10 has a structure sealed by the transparent substrates 2a and 2b.

In the spatial light modulator 10 having such a structure, an AC driving voltage is applied across the transparent electrodes 3a, 3b onto the liquid crystal layer 9 and the photoconductive layer 4. The driving voltage is mainly applied to the photoconductive layer 4 by causing the internal impedance of the photoconductive layer 4 to be larger than that of the liquid crystal layer 9 in the state where the writing light 11 is not irradiated.

When the information image is written on the photoconductive layer 4 by irradiating the writing light 11, the internal impedance of the photoconductive layer 4 is partially reduced in accordance with the brightness distribution of the information image, so that the information image is written in the liquid crystal layer 9 in such a manner that the driving voltage applied onto the liquid crystal 9 is changed in accordance with the reduction of the internal impedance of the photoconductive layer 4, which causes a change of aligning directions of liquid crystal molecules in the liquid crystal layer 9, thus, the reading light 12 passing through the liquid crystal layer 9 is spatially modulated by the liquid crystal layer 9.

Next, a description is given to the aligning direction of the liquid crystal molecules and the polarizing direction of the reading light 12 in the liquid crystal layer 9 employed in the spatial light modulator 10 of the prior art.

It is well known such a spatial light modulator as using a hybrid field effect mode of a liquid crystal layer 9 having a 45° twist angle alignment and using an ECB (electrically controlled bifringence) effect by aligning the liquid crystal molecules in a vertical direction or in a horizontal direction in an initial state. A long axis of each of the horizontally aligned liquid crystal molecules in the liquid crystal layer 9 is approximately aligned in parallel to or to have a little pre-tilt angle inclined to the substrates 2a, 2b. Further, the liquid crystal molecules of the liquid crystal layer 9 are aligned on the liquid crystal aligning layers 6a, 6b so as to be parallel each other.

Next, a description is given to a case where the spatial light modulator 10 having the liquid crystal layer 9 of which molecules are aligned in the horizontal direction is employed in the projector shown in Fig. 1.

When the polarizing beam splitter 15 is disposed between the spatial light modulator 10 and the light source 13 in such a manner that a polarizing axis of of the polarizing beam splitter 15 intersects at 45° with the long axis of each of liquid crystal molecules of the liquid crystal layer 9, a retardation (phase delay) R and a phase difference $\delta$ occur between the ordinary ray and the extraordinary ray while a lineally polarized incident light passes through the liquid crystal layer 9, which are respectively expressed as $R=\Delta n \cdot d$, $\delta=2\pi R/\lambda$, wherein "$\Delta n$" designates the anisotropy of the refractive index, "d" the thickness of the liquid crystal and λ the wavelength of the incident light. When the incident light is reflected by the reflected layer 5 and returns back through the liquid crystal layer 9, the retardation R and the phase difference δ occurs again. An intensity (J) of a transmitted light passing through the polarizing beam splitter 15, which is to be projected on the screen 17, is expressed using the retardation R and the phase difference δ as follows:

$$J \propto \sin^2 (2\delta/2)$$

$$= \sin^2 (2\pi\Delta n \cdot d/\lambda) \tag{1}$$

Thus, the spatial light modulator 10 is constructed so that the intensity (J) of the transmission light passing through the polarizing beam splitter 15 is made small by considering the equation (1) when the driving voltage is not applied to the spatial light modulator 10.

On the other hand, when an electric field is applied across the transparent electrodes 3a, 3b of the spatial light modulator 10, the liquid crystal molecules each having a positive anisotropy of dielectric characteristic are aligned in an inclined state approximately perpendicular to the transparent substrates 2a, 2b. Thus, the retardation R is changed because an effective anisotropy of refractive index changes together with the changes of the long axis directions of the liquid crystal molecules of the liquid crystal layer 9, by which the index of birefringence of the liquid crystal layer 9 is changed in accordance with a strength of the electric field of the liquid crystal layer 9, so that the ratio of the P-polarized light to the S-polarized light can be controlled, thus, the intensity of the transmission light passing through the polarizing beam splitter 15 is controlled or changed so as to reproduce and project the image information on the screen 17.

Conditions of the abovementioned spatial light modulator 10 in the prior art are shown in Table 1 as a comparative example 1 (com. 1).

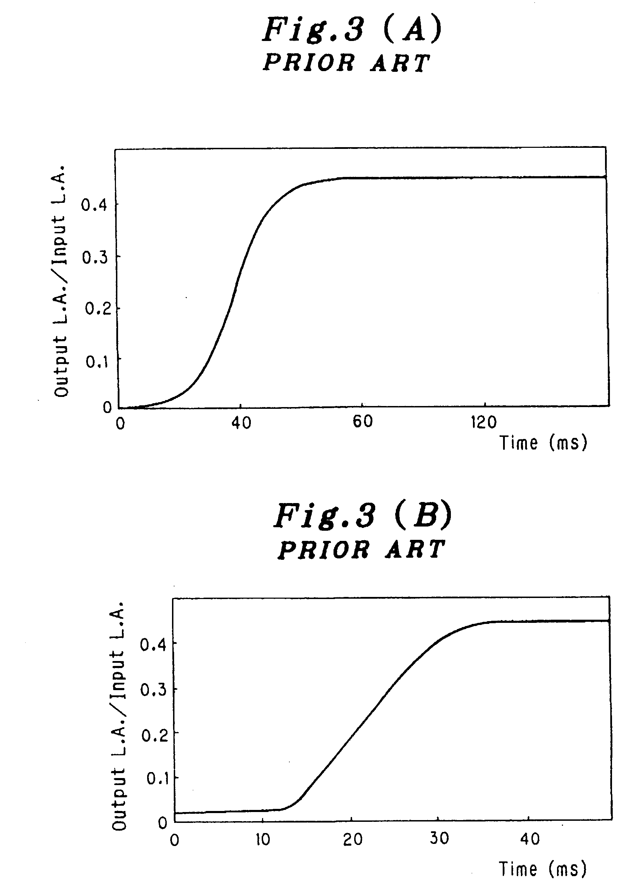

Fig. 3(A) is a graph showing a response characteristic of a comparative example 1 of a spatial light modulator in a prior art when an electric field is applied to the spatial light modulator.

Referring to Fig. 3(A), the horizontal axis shows the time lapse and the vertical axis shows the ratio of the output light amount to the input light amount, wherein the input light amount designates the amount of light which impinges on the polarizing beam splitter 15 and the output light amount designates the amount of light which is outputted from the polarizing beam splitter 15.

As mentioned in the foregoing, when an electric field is applied to the spatial light modulator 10, each of the liquid crystal molecules of the liquid crystal layer 9 comes to a predetermined inclined state to the transparent substrates 2a, 2b by increasing an angle made by a line of the long axis thereof and the transparent substrates 2a, 2b. However, until each of the liquid crystal molecules comes to a desired inclined state where a maximum contrast ratio is obtained, it takes 53 ms, in other words, a writing time requires 53 ms, as shown in Fig. 3(A), which poses a difficulty to respond to or follow a speedy motion of a motion picture in a case of displaying the motion picture.

Further, regarding the aligning directions of the liquid crystal molecules in the liquid crystal layer 9 used in the spatial light modulator 10 and the polarizing direction of the reading light in the prior art, there disclosed in USP 4019807, another spatial light modulator 10 using the hybrid field effect mode of the liquid crystal layer 9 employing a 45° twist angle alignment. The liquid crystal molecules of the liquid crystal layer 9 are aligned in such a manner that long-axes of the liquid crystal molecules have slight pre-tilt angles to the transparent substrates 2a, 2b and to be approximately in parallel to each other in a cross sectional view, taken along the thickness direction of the liquid crystal layer 9. Further the liquid crystal molecules of the liquid crystal layer 9 on the liquid crystal aligning layer 6a, 6b are respectively aligned in parallel to each other. A 45° twist aligning state of the liquid crystal layer 9 can be obtained by causing the the liquid crystal aligning layer 6a, 6b to be aligned so that the aligning directions of liquid crystal molecules on the liquid crystal aligning layers 6a, 6b make an angle of 45°. Thus, axes of the liquid crystal molecules are continuously twisted in the liquid crystal layer 9.

Therefore, when a linear polarized light impinges on the liquid crystal layer 9 in such a manner that the polarized direction of the polarized light is to be parallel to the long-axes of the liquid crystal molecules, the linear polarization light is rotated by 45° of the twist angle by the optical rotatory power of the crystal liquid layer 9.

Next, a description is given to a case where the spatial light modulator 10 having the abovementioned liquid crystal layer 9 having the twist angle of 45° is employed in the projector shown in Fig. 1.

When the polarizing beam splitter 15 is disposed between the spatial light modulator 10 and the light source 13 in such a manner that a polarizing axis of of the polarizing beam splitter 15 is to be parallel to the long axis of each of liquid crystal molecules of the liquid crystal layer 9, an incident light lineally polarized is rotated at an angle of 45° upon passing through the liquid crystal layer 9. However, when the light again passes through the liquid crystal layer 9 by being reflected with the reflecting layer 5, the reflected light is rotated at an angle of 45° in a reverse direction and resultantly it is polarized in the same polarizing direction as well as the initial incident light, thus the reflected light returns to the light source 13 by being reflected at a right angle with the joint surface of the polarizing beam splitter 15.

On the other hand, when an electric field is applied to the liquid crystal layer 9 across the transparent electrodes 3a, 3b, the aligned directions of the liquid crystal molecules having a positive anisotropy of dielectric constant are changed so as to approach the transparent substrates 2a, 2b in a vertical direction thereof, i.e., the liquid crystal molecules are obliquely aligned with the transparent substrates 2a, 2b in correspondence with a strength of the electric field. When the aligned direction thereof is changed like this, the effective anisotropy of refractive index thereof is changed, which greatly affects the polarization of the polarized light. Thus, the reflected light has no longer the same polarization as that of the initial incident light, and a light image is projected on the screen 17 because the transmission light passing through the polarization beam splitter 15 has a distribution of light intensity correspondingly with changed amounts of aligning directions of the liquid crystal molecules.

Conditions of the abovementioned spatial light modulator 10 in the prior art are shown in Table 2 as a comparative example 2.

Fig. 3(B) is a graph showing the response characteristic of a comparative example 2 of a spatial light modulator in the prior art when an electric field is applied to the spatial light modulator.

Referring to Fig. 3(B), a horizontal axis shows the time lapse and the vertical axis shows the ratio of the output light amount to the outputted light amount, wherein the input light amount designates the amount of light which impinges on the polarizing beam splitter 15 and the outputted light amount designates the amount of light which is outputted from the polarizing beam splitter 15.

As mentioned in the foregoing, when an electric field is applied to the spatial light modulator 10, each of the liquid crystal molecules of the liquid crystal layer 9 comes to a predetermined inclined state by increasing the angle made by the long axis of the liquid crystal molecules and the transparent substrates 2a, 2b.

However, until each of the liquid crystal molecules comes to a desired inclined state where a maximum contrast ratio is obtained, it takes 32 ms, i.e., a writing time requires 32 ms, as shown in Fig 3(B), which poses a difficulty to respond to or to follow a speedy motion of a motion picture in a case of displaying the motion picture as mentioned in the foregoing.

SUMMARY OF THE INVENTION

Accordingly, a general object of the present invention is to provide a spatial light modulator (valve) in which the above disadvantages have been eliminated.

More specific object of the present invention is to provide a spatial light modulator having a high speed response characteristic by aligning the liquid crystal molecules in a different way from that of the prior art.

Another and more specific object of the present invention is to provide a spatial light modulator comprising, a liquid crystal layer interposed between a first and second liquid crystal aligning layer, a light reflecting layer and a photoconductive layer being provided on the outside of the second liquid crystal aligning layer in this order, a pair of transparent electrodes opposing parallel each other provided on the outside of the first liquid crystal aligning layer and the photoconductive layer respectively, a pair of transparent substrates opposing parallel each other provided on the outsides of the pair of transparent electrodes respectively ly, a first group of liquid crystal molecules in the liquid crystal layer disposed adjacent to the first liquid crystal aligning layer with their long-axes parallel to each other, a second group of liquid crystal molecules in the liquid crystal layer disposed adjacent to the second liquid crystal aligning layer with their long-axes parallel to each other, the photoconductive layer being arranged to be irradiated by a writing light carrying an image information through one of the transparent electrodes for writing the image information thereon, the liquid crystal layer being arranged to be irradiated by a polarized reading light having a polarizing direction through the other of the transparent electrodes and the first liquid crystal aligning layer, for reading out the image information, the light reflecting layer reflecting the polarized reading light projected out of the liquid crystal layer, wherein the first group of the liquid crystal molecules is aligned in such a manner that the aligning direction on the first aligning layer intersects, at an angle defined within the range of 30° ~ 60°, the polarizing direction of the polarized reading light, the liquid crystal layer has a value of $\Delta n \cdot d$ within the range of 0.45~0.75 $\mu$m, where "$\Delta n$" and "d" respectively designates the anisotropy of birefringence of the liquid crystal layer and the thickness of the liquid crystal layer, one of the first and second groups of the liquid crystal molecules makes a tilt angle to the transparent substrates within the range of 0°~10° and the other thereof makes a tilt angle thereto within the range of 80°~90°, and the aligning directions on the first and second aligning layers are parallel to each other.

Other specific object of the present invention is to provide a spatial light modulator comprising, a liquid crystal layer interposed between a first and second liquid crystal aligning layer, a light reflecting layer and a photoconductive layer being provided on the outside of the second liquid crystal aligning layer in this order, a pair of transparent electrodes opposing parallel each other provided on the outside of the first liquid crystal aligning layer and the photoconductive layer respectively, a pair of transparent substrates opposing parallel each other provided on the outsides of the pair of transparent electrodes respectively, a first group of liquid crystal molecules in the liquid crystal layer disposed adjacent to the first liquid crystal aligning layer with their long-axes parallel to each other, a second group of liquid crystal molecules in the liquid crystal layer disposed adjacent to the second liquid crystal aligning layer with their long-axes parallel to each other, the photoconductive layer being arranged to be irradiated by a writing light carrying an image information through one of the transparent electrodes for writing the image information thereon, the liquid crystal layer being arranged to be irradiated by a polarized reading light having a polarizing direction through the other of the transparent electrodes and the first liquid crystal aligning layer, for reading out the image information, the light reflecting layer reflecting the polarized reading light projected out of the liquid crystal layer, wherein the first group of the liquid crystal molecules is aligned in such a manner that the aligning direction on the aligning layer intersects, at an angle defined within the range of 0° ~ ±5° or 90° ~ ±5°, the polarizing direction of the polarized reading light, the liquid crystal layer having a value of Δn·d within the range of 0.45~0.75 μm, where "Δn" and "d" respectively designates the anisotropy of birefringence and the thickness of the liquid crystal layer, one of the first and second group of the liquid crystal molecules makes a tilt angle to the transparent substrates within the range of 80°~90° and the other thereof makes a tilt angle thereto within the range of 0°~10°, and the liquid crystal layer has a twisted structure in the direction of the thickness thereof having a twist angle within the range of 40°~50°.

Other objects and further features of the present invention will be apparent from the following detailed description.

BRIEF DESCRIPTION OF THE DRAWINGS

Fig. 1 is a diagram, partially pictorial and partially schematic, of a projector employing a spatial light modulator.

Fig. 2 is a cross-sectional view showing a spatial light modulator employed in a projector of the prior art.

Fig. 3(A) is a graph showing a response characteristic of a comparative example 1 of of a spatial light modulator in the prior art when an electric field is applied to the spatial light modulator.

Fig. 3(B) is a graph showing a response characteristic of a comparative example 2 of a spatial light modulator in another prior art when an electric field is applied to the spatial light modulator.

Fig. 4 is a cross-sectional view showing a construction of the spatial light modulator according to the present invention.

Fig. 5(A) is a perspective view for explaining aligning directions of liquid crystal molecules of a liquid crystal layer in a first embodiment.

Fig. 5(B) is a plan view of the liquid crystal layer shown in Fig. 5(A).

Fig. 6(A) is a graph showing the relation between a first tilt angle $\theta 1$ and the contrast ratio of the light output amount to the light input amount in the first embodiment when a driving electric field is applied and not applied.

Fig. 6(B) is a graph showing the relation between the second tilt angle $\theta 2$ and the contrast ratio of the light output amount to the light input amount in the first embodiment when a driving electric field is applied (on) and not applied (off).

Fig. 7 is a graph showing the relation between the contrast ratio of the output light amount to the input light amount and the aligning direction of the first group of liquid crystal molecules to the polarizing direction of the reading light in the first embodiment, when the driving electric field is varied "on" and "off".

Fig, 8 is a graph showing the relation between the value of Δn·d and the contrast ratio of the output light amount to the input light amount in the first embodiment when the supplied electric field is varied on or off.

Fig. 9 is a graph showing the response characteristic of the spatial light modulator 1 of the first embodiment of the present invention, when an electric field is applied to the spatial light modulator.

Fig. 10(A) is a perspective view for explaining aligning directions of the liquid crystal molecules of a liquid crystal layer in a second embodiment.

Fig. 10(B) is a plan view the liquid crystal layer shown in of Fig. 10(A).

Fig. 11(A) is a graph showing the relation between the first tilt angle $\theta 1$ and a contrast ratio of the light output amount to the light input amount in the second embodiment when a driving electric field is applied (on) and not applied (off).

Fig. 11(B) is a graph showing the relation between the second tilt angle $\theta 2$ and the contrast ratio of the light output amount to the light input amount in the second embodiment when a driving electric field is applied (on) and not applied (off).

Fig. 12 is a graph showing a relation between the twisted angle $\phi$ and the contrast ratio of the light output amount to the light input amount in the second embodiment when a driving electric field is applied (on) and not applied (off).

Fig. 13 is a graph showing the relation between the contrast ratio of the output light amount to the input light amount and an angle $\Psi$ between the polarizing direction of the reading light and an aligning direction ( long axis direction) of the first liquid crystal molecules 7a in the second embodiment when a driving electric field is varied "on" and "off".

Fig. 14 is a graph showing the relation between the value of Δn·d and the contact ratio of the output light amount to the input light amount in the second embodiment when the supplied electric field is varied "on" or "off", wherein Δn: birefringence anisotropy of the liquid crystal layer and "d" (μm): thickness of the liquid crystal layer of the spatial light modulator.

Fig, 15 is a graph showing the response characteristic of the second embodiment of the present invention when an electric field is applied to the spatial light modulator.

## DETAILED DESCRIPTION OF THE PREFERRED EMBODIMENT

A first and second embodiments of a spatial light modulator according to the present invention will be described with reference to the drawings 4 through 15.

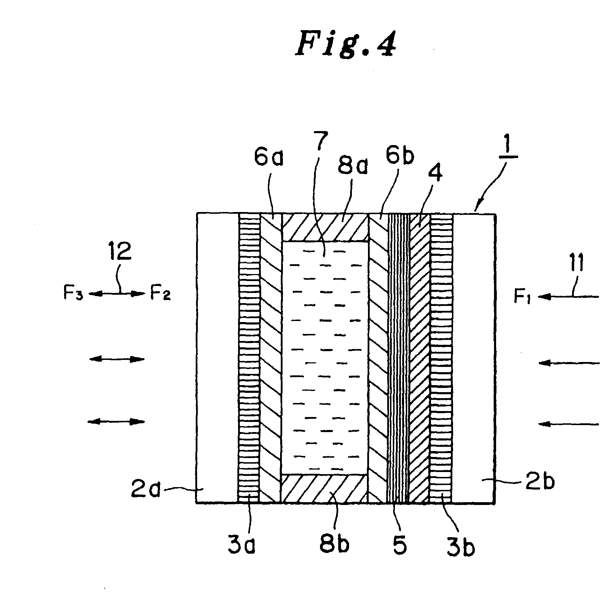

Fig. 4 is a cross-sectional view showing a construction of the spatial light modulator 1 according to the present invention, wherein like reference characters designate like parts in Fig. 2.

(A first embodiment of the spatial light modulator)

A first embodiment of a spatial light modulator 1 of the present invention has the same construction as that of the spatial light modulator 10 of the prior art, however, aligning directions of the liquid crystal molecules of the liquid crystal layer 7 are different therefrom. The aligning directions of the liquid crystal molecules will be described thereafter.

Referring to Fig. 4, the numeral 1 designates a spatial light modulator according to the present invention, 2a, 2b, transparent substrates disposed in parallel to each other, and 3a, 3b, transparent electrodes disposed between the glass substrates 2a, 2b. At the side of the transparent electrode 3b through which a writing light 11 Impinges in the direction of an arrow F1, a photoconductive layer 4 and a reflecting layer 5 are laminated in the order.

At another side of the transparent electrode 2a on which a reading light 12 impinges in the direction of an arrow F2, a liquid crystal layer 7 is formed as a cell confined by liquid crystal alignment layers 6a, 6b and spacers 8a, 8b. In the liquid crystal layer 7, the liquid crystal is filled so as to have different aligning directions from those of the prior art mentioned in the foregoing.

In this embodiment, transparent glass plates are employed as the transparent substrates 2a, 2b, however, transparent resin can be also employed instead of the transparent glass plates.

Generally, the transparent electrodes 3a, 3b are formed of $IO_2$ or $SnO_2$. The photoconductive layer 4 formed on the transparent electrode 3b is provided by using such a photoconductive material as hydrogenated amorphous silicon, CdSe, PbS or a compound thereof. As the reflecting layer 5 stacked on the photoconductive layer 4, such a multiple layer as zinc sulfide (ZnS), magnesium fluoride ($MgF_2$), silicon oxide (SiO) or silicon dioxide ($SiO_2$) is employed.

Further, as the liquid crystal aligning layers 6a, 6b, conventional ones to be used in liquid crystal display elements can be optionally employed considering aligning directions of the liquid crystal molecules of the liquid crystal layer 7. In this embodiment, as the liquid crystal aligning layer 6a provided on the side of the transparent substrate 2a, there is employed a polymer layer such as polyimid, polyamid and polyvinyle which cause the liquid crystal molecules to align in a parallel direction to the liquid crystal aligning layer 6a. On the other hand, as the liquid crystal aligning layer 6b provided on the side of the transparent substrate 2b, there is employed long-chain alcohol, silane coupling agent or chromium complex which causes the liquid crystal molecules thereof to align in a perpendicular direction to the liquid crystal aligning layer 6b together with SiO or $SiO_2$ layer previously provided for giving a predetermined pre-tilt angle to the liquid crystal molecules of the liquid crystal layer 7.

Next, a detailed description is given to the liquid crystal layer 7 of the present invention.

As a material of the liquid crystal layer 7, a nematic liquid crystal having a positive or a negative anisotropy of dielectric is used in the present invention. For instance, fluoro, schiff's base, azo, azoxy, ester, biphenyl, phenyl, cyclohexyl, pyrimidinyl, dioxane fragment and so on are used independently or in a mixed state.

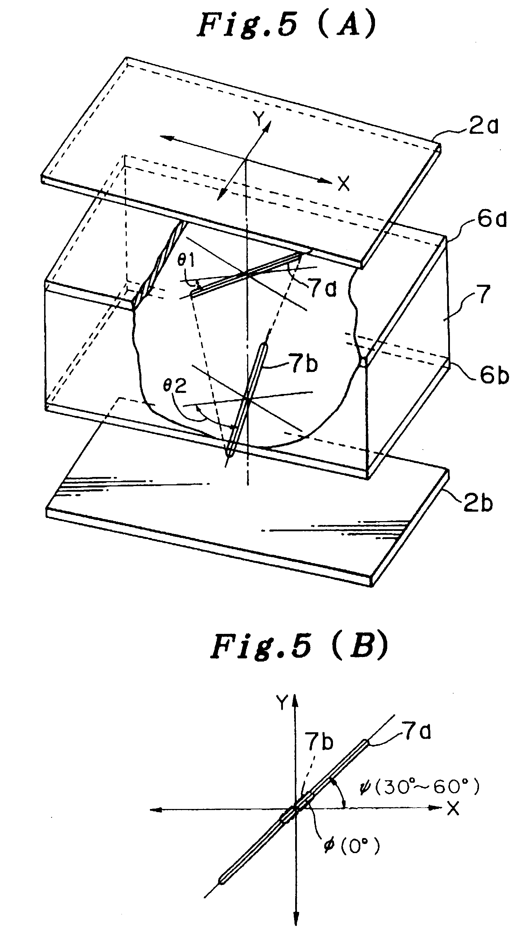

Further, a description is given to the aligning direction of the liquid crystal layer 7 in accompany with Figs. 5(A) and 5(B).

Fig. 5(A) is a perspective view for explaining aligning directions of the liquid crystal molecules of the liquid crystal layer 7 in the first embodiment.

Fig. 5(B) is a plan view of Fig. 5(A).

Referring to Fig.5 (A), parts of liquid crystal molecules contacting with the liquid crystal aligning layer 6a in the liquid crystal layer 7 are referred to as a first group of liquid crystal molecules 7a, on the other hand, parts of liquid crystal molecules contacting with the liquid crystal aligning layer 6b is referred to as a second group of liquid crystal molecules 7b.

In this embodiment, a first tilt angle $\theta 1$ made by the long-axis of the liquid crystal molecule in the first group of liquid crystal molecules and the surface of the liquid crystal aligning layer 6a is determined to be within a range from $0° \sim 10°$, and a second tilt angle $\theta 2$ made by the long-axis of the liquid crystal molecules in the second group of liquid crystal molecules 7b and the surface of the liquid crystal aligning layer 6b is determined to be within a range from $80° \sim 90°$, wherein the liquid crystal molecules 7a of the first group are aligned in parallel to each other as well as the liquid crystal molecules of the second group.

It is noted that in Figs. 5 (A) and 5 (B), the reference character X designates the polarizing direction (or the perpendicular direction to the polarizing direction ) of the polarizing beam splitter 15 and the reference character Y designates the perpendicular direction to the polarizing direction ( or the polarizing direction ) of the polarizing beam splitter 15.

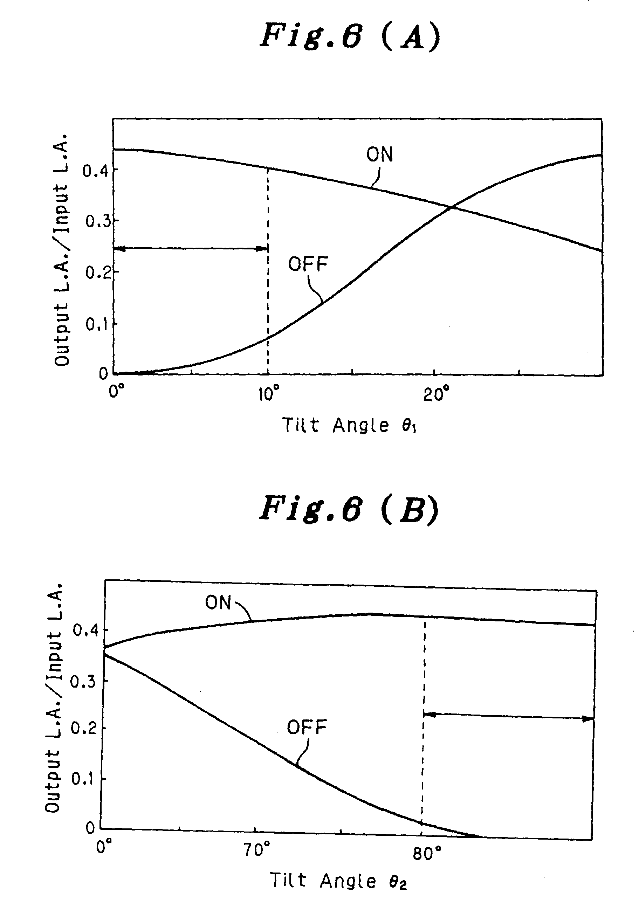

Fig. 6(A) is a graph showing the relation between the first tilt angle $\theta 1$ and the contrast ratio of the light output amount to the light input amount in the first embodiment when a driving electric field is applied (on) and not applied (off).

Fig 6(B) is a graph showing the relation between the second tilt angle $\theta 2$ and the contrast ratio of the light output amount to the light input amount when a driving electric field is applied (on) and not applied (off).

As will be understood from Figs. 6(A) and 6(B), the contrast ratio of the light output amount to the light input amount becomes larger when the range of the first tilt angle $\theta 1$ is made within 0°-10° and the range of the second tilt angle $\theta 2$ is made within 80°~90°. Further, the closer the first and second tilt angles $\theta 1$ and $\theta 2$ respectively come to 0° and 90°, the larger the contrast ratios of them become, however, which poses a reduction of the response speed and invites disclination of liquid crystal molecules.

Further, the first and second group of liquid crystal molecules 7a and 7b are respectively aligned in parallel in a plan view as shown in Fig. 5(B). In other words, the liquid crystal layer 7 of the first embodiment has no twisted structure in a thickness direction thereof, i.e, the twist angle $\phi$ is approximately 0°, which improves the optical characteristic of the spatial light modulator 1. Further, the direction of the polarizing light axis of the incident light which is corresponding to the polarizing axis direction X of the polarizing beam splitter 15 is preferably to be 45° to the long axis of the first group of liquid crystal molecule 7a or is determined at least to be within a range of 30°-60° taking account of the contrast ratio.

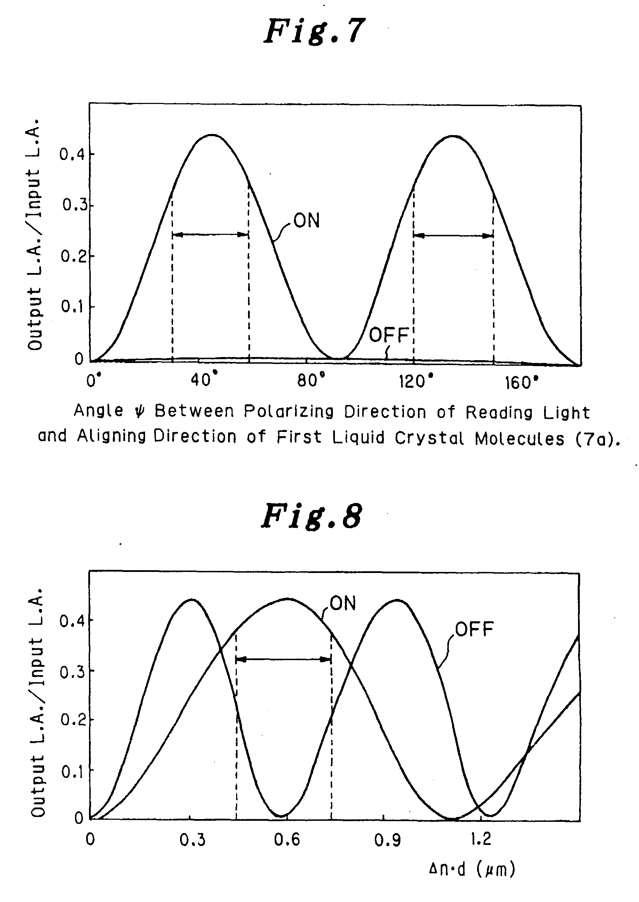

Fig. 7 is a graph showing the relation between the contrast ratio of the output light amount to the input light amount and the angle $\Psi$ between the polarizing direction of the reading light and the aligning direction (long axis direction) of the first group of liquid crystal molecules 7a in the first embodiment when a driving electric field is varied "on" and "off".

Referring to Fig. 7, it will be understood that in order to obtain the large contrast ratio, the aligning direction of the first liquid crystal molecule to the polarizing direction of the reading light is preferable to be determined to be within 30° - 60°.

Fig. 8 is a graph showing the relation between the value of $\Delta n \cdot d$ and the contrast ratio of the output light amount to the input light amount in the first embodiment when the supplied electric field is varied on or off, wherein $\Delta n$: birefringence anisotropy of the liquid crystal layer 7 and d (μm): thickness of the liquid crystal layer 7 of the spatial light modulator 1.

As clearly understood from Fig. 8, the ratio of the output light amount to the input light amount shows a high dependency on the value of $\Delta n \cdot d$ in the spatial light modulator 1, and it is desirable for the value of $\Delta n \cdot d$ to be determined within the range of 0.45 μm ~ 0.75 μm taking account of the contrast ratio and brightness.

As a component of the projector shown in Fig. 1, there is employed in the projector the second embodiment of the spatial light modulator 1 provided with the liquid crystal layer 7 having features that the value of $\Delta n \cdot d$ is made to be within the range of 0.45 μm - 0.75 μm, the first tilt angle $\theta 1$ of the first liquid crystal molecules 7a (7b) is made to be within the range of 0°~10°, and the second tilt angle $\theta 2$ of the second liquid crystal molecules 7b (7a) is made to be within the range of 80°~90°, when the polarizing direction of the incident light (the reading light 12) is inclined to the aligning direction of the first group of the liquid crystal molecules 7a by an angle within the range of 30° ~ 60°.

Next, a description is given to an operation of the spatial light modulator 1.

Generally, in the above mentioned projector, a light image generated by, for instance, a CRT impinges on the spatial light modulator 1 as a writing light 11. On the other hand, after a light generated by the light source 13 is made a parallel light through the condenser lens 14 as the reading light, the reading light is irradiated on the spatial light modulator 1 through the polarizing beam splitter 15. After reflected by the reflecting layer 5, the reading light which is spatially modulated by the liquid crystal layer 7 passes through the polarizing beam splitter 15 and displayed on the screen 17 through the projection lens 16 as an light image.

Further, referring to Fig, 4, an eternal electric source (not shown) is connected across the transparent electrodes 3a, 3b and an optimum AC driving voltage is applied, wherein the internal impedance of the photoconductive layer 4 is made large enough compared with that of the liquid crystal layer 7, so that the driving voltage is mainly applied to the photoconductive layer 4.

When the writing light 11 caring image information is irradiated on the spatial light modulator 1 and the information image is written on the photoconductive layer 4 by the writing light 11, the internal impedance of the photoconductive layer 4 is partially decreased in correspondence with the brightness and the darkness of the information image, so that the driving voltage is applied to the liquid crystal layer 7 in such a manner that portions of the liquid crystal layer 7 which portions are adjacent to the internal impedance decreased portions thereof are spatially modulated in correspondence with the brightness of the light image, thus, the aligning state of liquid crystal molecules in the liquid crystal layer 7 is changed in correspondence with the voltage increased portions of the liquid crystal layer 7.

When the applied voltage to the liquid crystal layer 7 is increased, the long-axis directions of the liquid crystal molecules having a positive dielectric anisotropy are aligned to be approximately perpendicular to the liquid crystal aligning layers 6a, 6b. In other words, the first tilt angle θ1 initially given to the long-axis of the fist group of liquid crystal molecules 7a is made as small as 0°~10°, thus, the change of tile first tilt angle θ1 becomes large even though a small voltage is applied to the liquid crystal layer 7, and the tilt angle θ2 initially given to the long-axis of the fist group of liquid crystal molecules 7b is made as large as 80°~90°, thus, the change of the first tilt angle θ1 becomes small when a small voltage is applied to the liquid crystal layer 7. In this state of the spatial light modulator 1, the effective anisotropy of birefringence of the liquid crystal layer 7 changes together with the change of direction of the long axis of the liquid crystal molecule, so that the index of the birefringence of the liquid crystal layer 7 is changed, thus, an output reading light reflected by the reflecting layer 5 and returned through the liquid crystal layer 7 has a different polarization from that of the initial linear polarizing light which is obtained by causing the initial reading light 12 to reflect at right angle by the polarizing beam splitter 15. The change of polarization of the reading light allows to obtain a transmitting light passing through the polarizing beam splitter 15. Thus, a light image having an excellent contrast ratio is projected on the screen 17.

In this spatial light modulator 1, the information image written in the photoconductive layer 4 diminishes as a time lapses because the alignment state of liquid crystal molecules returns by itself to the initial state when the writing light is removed from irradiation, i.e., utilizing reversible change of alignment of the liquid crystal molecules.

Table 1 shows exemplary physical conditions and experimental results of the spatial light modulator 1 of the present invention regarding examples 1-4 of the embodiment 1 of the present invention together with the comparative example 1 of the prior art.

Table 1

| | (1) d (μm) | (2) Δn | (3) Δε | (4) θ1 ( ˚ ) | (5) θ2 ( ˚ ) | (6) φ ( ˚ ) | (7) ψ ( ˚ ) | (8) App. Vol. (v) | (9) Res. Time (ms) | (10) Fig. |
|---|---|---|---|---|---|---|---|---|---|---|
| Com. 1 | 3.0 | 0.18 | 8.0 | 2.0 | 2.0 | 0 | 45 | 1.58 | 53 | 3(A) |
| Emb. 1 | | | | | | | | | | |
| Ex. 1 | 3.0 | 0.19 | 8.0 | 2.0 | 88.0 | 0 | 45 | 1.42 | 10 | 9 |
| Ex. 2 | 3.0 | 0.19 | 8.0 | 88.0 | 2.0 | 0 | 45 | 1.53 | 10 | none |
| Ex. 3 | 3.0 | 0.20 | -1.2 | 2.0 | 88.0 | 0 | 45 | 4.18 | 8 | none |
| Ex. 4 | 3.0 | 0.20 | -1.2 | 88.0 | 2.0 | 0 | 45 | 4.01 | 8 | none |

Wherein (1)-(10) denote as follows:

(1) thickness (d) of the liquid crystal layer (μm)

(2) anisotropy of the refractive index of liquid crystal molecule (Δn)

(3) anisotropy of the dielectricity of liquid crystal molecule (Δε)

(4) tilt angle θ1 (degree) of the first liquid crystal molecules 7a on the transparent substrate 2a

(5) tilt angle θ2 (degree) of the second liquid crystal molecules 7a on the transparent substrate 2b

(6) twist angle ψ (degree) of the liquid crystal molecules

(7) angle φ (degree) between the polarizing direction of the reading light and the aligning direction (long axis direction) of the first group of liquid crystal molecules 7a

(8)   applied voltage (V) to the liquid crystal layer

(9)   response time (ms) of the spatial light modulator

(10)  corresponding figures

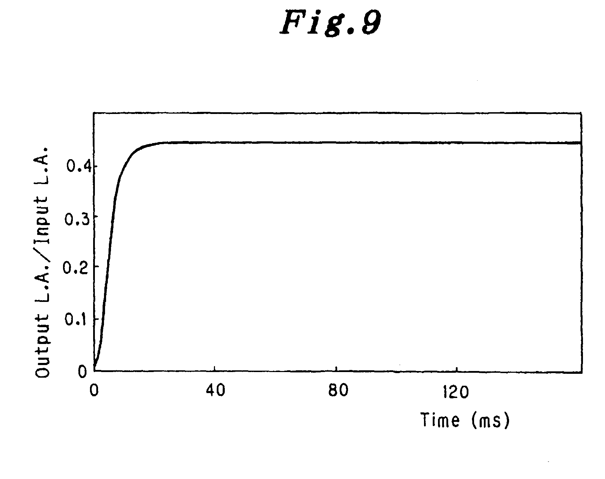

Fig. 9 is a graph showing a response characteristic of the spatial light modulator 1 of the first embodiment, when an electric field is applied to the spatial light modulator.

Referring to Fig. 9, a horizontal axis shows a time lapse and a vertical axis shows the ratio of an output light amount to the incident light amount as mentioned in Fig. 3(A).

As clearly understood from Fig. 9, the spatial light modulator 1 of the present invention has a very high speed response characteristic because a required time lapse to obtain a maximum contrast ratio from the initial state, i.e., the writing time is approximately 10 ms.

(Second embodiment)

A second embodiment of a spatial light modulator 1 according to the present invention will be described with reference to the drawings.

The spatial light modulator 1 of the second embodiment of the present invention has basically the same construction as that of the spatial light modulator 1 of the first embodiment as shown in Fig. 4, however, aligning directions of the liquid crystal molecules of the liquid crystal layer 7 in the second embodiment are different from those of the first embodiment, thus, like reference characters designate like parts in Fig. 4 and a detailed description of the construction thereof is omitted for simplicity. Then, the aligning directions of the liquid crystal molecules and differences of the construction will be described hereafter together with the operation and the advantage thereof.

At first, a detailed description is given to the liquid crystal layer 7 of the second embodiment.

As materials of the liquid crystal layer 7, a nematic liquid crystal having a positive dielectric anisotropy are used in the second embodiment. For instance, fluoro, schiff's base, azo, azoxy, ester, biphenyl, phenyl, cyclohexyl, pyrimidinyl, dioxane fragment and so on are used indivdually or in a mixed state.

Further, as the liquid crystal alignment layers 6a, 6b, conventional ones to be used in liquid crystal display elements are optionally used considering aligning directions of the liquid crystal molecules of the liquid crystal layer 7.

In this embodiment, as the liquid crystal aligning layer 6a provided on the side of the glass substrate 2a, there is employed long-chain alcohol, silane coupling agent or chromium complex which causes the liquid crystal molecules thereof to align in a perpendicular direction to the liquid crystal aligning layer 6a together with SiO or $SiO_2$ layer previously provided for giving a predetermined pre-tilt angle to the liquid crystal molecules of the liquid crystal layer 7. On the other hand, as the liquid crystal aligning layer 6b provided on the side of the glass substrate 2b, there is employed such a polymer layer as polyimid, polyamid or polyvinyle which causes the liquid crystal molecules to align in a parallel direction to the liquid crystal aligning layer 6b.

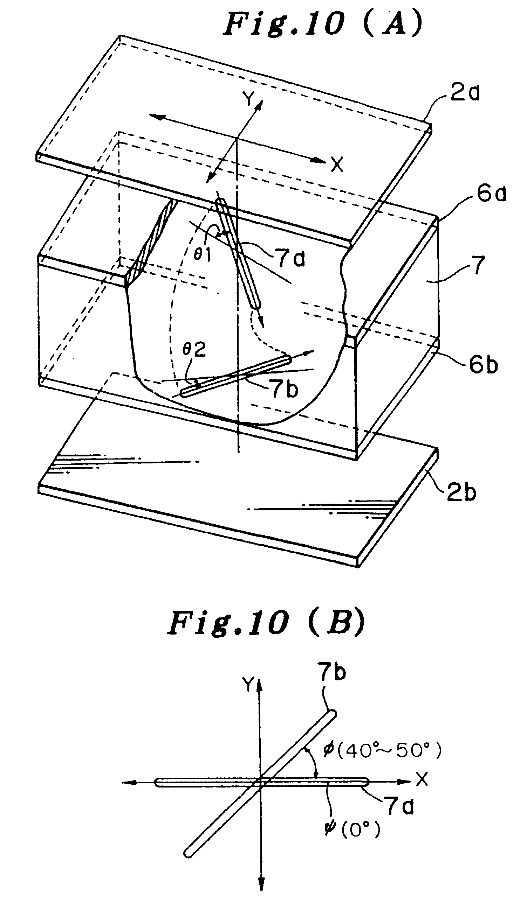

Further, a description is given to the aligning direction of the liquid crystal layer 7 by accompanying Figs. 10(A) and 10(B).

Fig. 10(A) is a perspective view for explaining aligning directions of the liquid crystal molecules in the second embodiment.

Fig. 10(B) is a plan view of Fig. 10(A).

Referring to Fig. 10(A), parts of liquid crystal molecules contacting with the liquid crystal aligning layer 6a in the liquid crystal layer 7 is referred to as a first group of liquid crystal molecules 7a on the liquid crystal aligning layer 6a, on the other hand, parts of liquid crystal molecules contacting with the liquid crystal aligning layer 6b is referred to as a second group of liquid crystal molecules 7b on the liquid crystal aligning layer 6b as mentioned in the foregoing. Thus, a first tilt angle θ1 made by a long-axis of each of the first group of liquid crystal molecules 7a and the surface of the liquid crystal aligning layer 6a is determined to be within a range of 80°~90° and a second tilt angle θ2 made by a long-axis of each of the second group of liquid crystal molecules 7b and the surface of the liquid crystal aligning layer 6b is determined within a range from 0°~10°, wherein the liquid crystal molecules 7a of the first group are aligned in parallel to each other as well as the liquid crystal molecules of the second group.

It is noted that in Figs. 10 (A) and 10 (B), the reference character X designates the polarizing direction (or the direction perpendicular to the polarizing direction) of the polarizing beam splitter 15 and the reference character Y designates the direction perpendicular to the polarizing direction (or a polarizing direction) of the polarizing beam splitter 15.

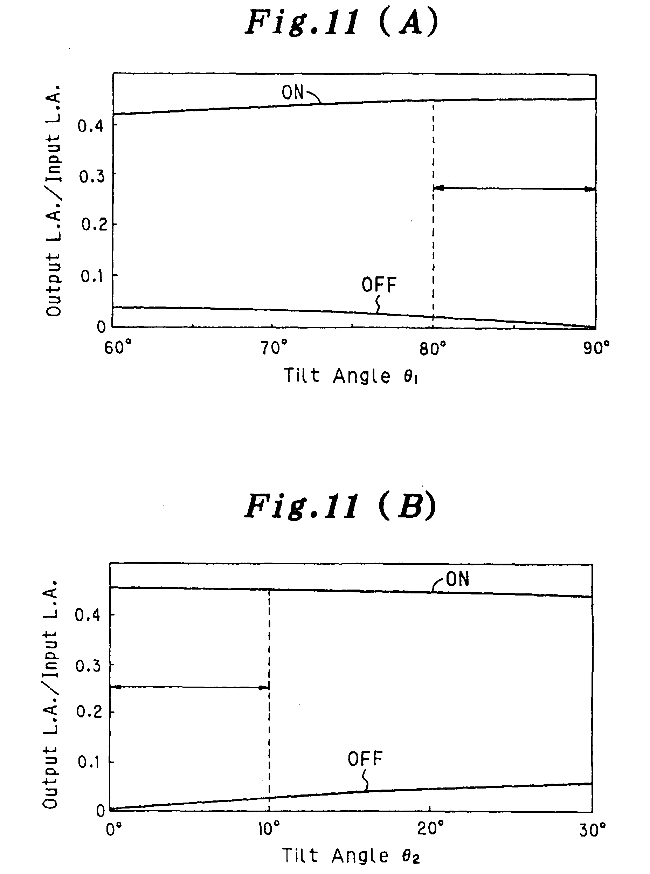

Fig. 11(A) is a graph showing a relation between a first tilt angle θ1 and the contrast ratio of the light output amount to the light input amount in the second embodiment when a driving electric field is applied and not applied.

Fig. 11(B) is a graph showing a relation between the second tilt angle θ2 and the contrast ratio of the light output amount to the light input amount when a driving electric field is applied (on) and not applied (off).

As will be understood from Figs. 11(A) and 11(B), the contrast ratio of the light output amount to the light input amount becomes larger when the first tilt angle θ1 is made to be within the range of 80°~90° and the second tilt angle θ2 is made to be within the range of 0°~10°. Further, the contrast ratio of the light output amount to the light input amount becomes larger when the first tilt angle θ1 is made to be within the range of 0°~10° and the second tilt angle θ2 is made to be within the range from 80°~90°. Furthermore, when the closer the first and second tilt angles θ1 and θ2 respectively comes to 90° and 0°, the larger the contrast ratios of them become, however, it poses a reduction of the response speed and inviting disclinations of liquid crystal molecules.

Referring to Fig. 10(B), there is shown a twisted angle φ between the first group of the liquid crystal molecules 7a on the liquid crystal aligning layer 6a and the second group of liquid crystal molecules 7b on the liquid crystal aligning layer 6b. In other words, the liquid crystal molecules of the liquid crystal layer 7 form a helical structure having a twist angle φ in a counterclockwise direction in the thickness direction of the liquid crystal layer 7.

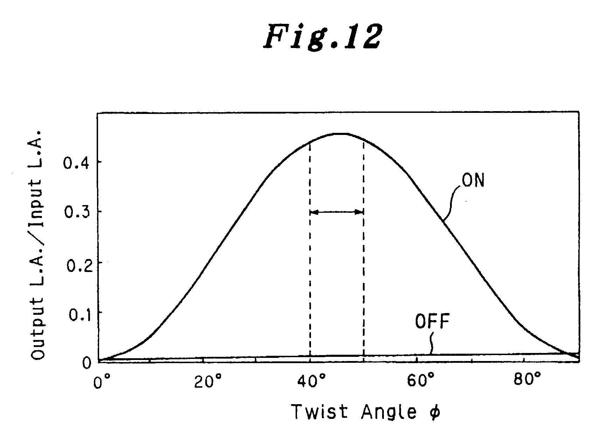

Fig. 12 is a graph showing the relation between the twisted angel φ and the contrast ratio of the light output amount to the light input amount in the second embodiment when a driving electric field is applied (on) and not applied (off).

Referring to Fig. 12, it will be understood that the contrast ratio of the light output amount to a light input amount becomes larger by causing the twisted angle φ to be 40°~50°. In order to make the twisted angle φ to be 40°~50°, the liquid crystal aligning layer 6a and the liquid crystal aligning layer 6b are respectively provided on the transparent substrates 2a and 2b in such a manner that the angle made by the two lines of aligned directions of the liquid crystal molecules on the liquid crystal aligning layers 6a and 6b becomes within 40°~50° on a plan view as shown in Fig. 10 (B). Thus, axes of the liquid crystal molecules is continuously twisted in the liquid crystal layer 7. The twisted angle φ of the liquid crystal molecules can be made stable by an amount and a kind of additives applied in the liquid crystal layer 7.

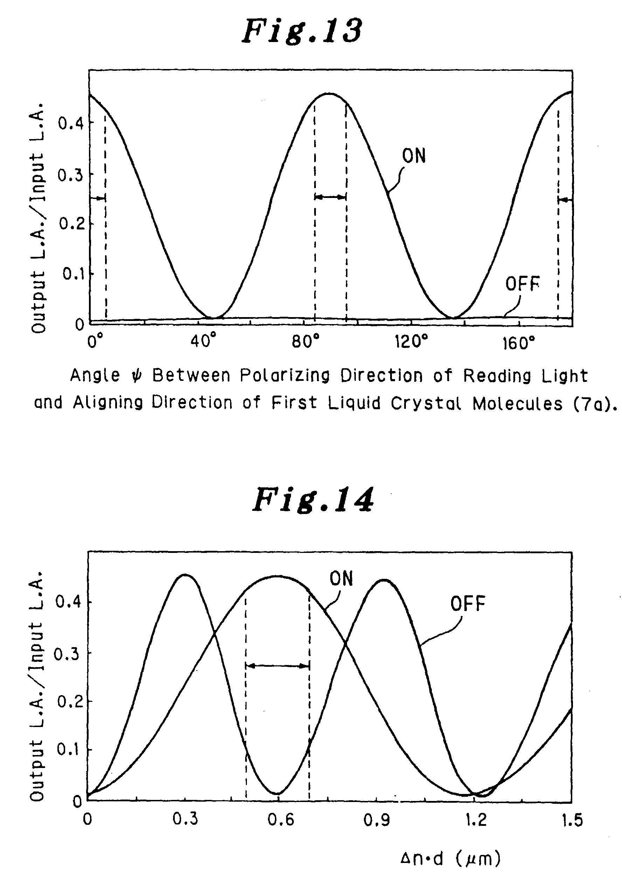

Fig. 13 is a graph showing the relation between the ratio of the output light amount to the input light amount and the angle Ψ between a polarizing direction of the reading light and the aligning direction (long axis direction) of the first liquid crystal molecules 7a in the second embodiment when a driving electric field is varied "on" and "off".

Referring to Fig. 10(B), the abovementioned angle ψ is defined as the angle made by both lines of directions, the aligning direction of the first liquid crystal molecules 7a on the liquid aligning layer 6a provided on the transparent substrate 2a and the polarizing direction X of a polarized reading light.

In this embodiment, as will be understood from Fig. 13, the polarizing direction X of the incident reading light is preferably determined to be parallel to the aligning direction of the first liquid crystal molecules 7a of the first liquid crystal aligning layer 6a or at least within the range of 0°~ ± 5° and the range of 90°~ ± 5° taking account of the contrast ratio and colors of the image. In other words, the angle ψ defined in the foregoing is determined to be at least within the range of 0°~± 5° and the range of 90° ~ ± 5°.

Fig. 14 is a graph showing the relation between the value of Δn·d and the contrast ratio of the output light amount to the input light amount in the second embodiment when the supplied electric field is varied "on" or "off", wherein Δn: birefringence anisotropy of the liquid crystal layer 7 and d (μm): thickness of the liquid crystal layer 7 of the spatial light modulator 1.

As clearly understood from Fig. 14, the ratio of the output light amount to the input light amount shows a high dependency on the value of Δn·d in the spatial light modulator 1, and it is desirable for the value of Δn·d to be determined within 0.45 μm ~ 0.75 μm taking account of the contrast ratio and brightness of the light image.

As a component of the projector shown in Fig. 1, there is employed in the projector the second embodiment of the spatial light modulator 1 provided with the liquid crystal layer 7 having features that the value of Δn·d is made to be within the range of 0.45 μm ~ 0.75 μm and the first tilt angle θ1 of the first group of liquid crystal molecules 7a (7b) is made to be within the range of 0°~10° and the second tilt angle θ2 of the second group of liquid crystal molecules 7b (7a) is made to be within the range of 80°~90°, of which the spatial light modulator 1 is irradiated by a polarized reading light by causing a polarizing direction of the reading light ( an incident light)to be inclined to the aligning direction of the first liquid crystal molecules 7a within the range of 0°~± 5°.

Next, a description is given to an operation of the second embodiment of the spatial light modulator 1.

Basically, the second embodiment of the spatial light modulator 1 is used in the projector shown in Fig.1 in the same manner as that of the first embodiment of the spatial 1 light modulator thus, a description is given only to the operation of the liquid crystal layer 7.

When the applied voltage to the liquid crystal layer 7 is increased, the long-axis directions of the liquid crystal molecules, each having positive dielectric anisotropy, are aligned to be nearly perpendicular to the transparent substrates 2a, 2b maintaining twisting angles in a range of 40°~50°. In other words, the first tilt angle θ1 initially given to the long-axis of the fist crystal molecules 7a is made as larger as 80°~90° as mentioned in the foregoing, thus, the change of the first tilt angle θ1 becomes small even though a large voltage is applied to the liquid crystal layer 7, on the other hand, the second tilt angle θ2 initially given to the long-axis of the fist crystal molecules 7b is made as small as 0°~10°, thus, the change of the second tilt angle θ2 becomes larger when a small voltage is applied to the liquid crystal layer 7. In this state, the spatial light modulator 1 loses an initial optical rotary power in accordance with the change of direction of the long axis of the liquid crystal molecules, so that influence of the birefringence is increased, thus, an output reading light reflected by the reflecting layer 5 and returned through the liquid crystal layer 7 is different from the initial linear polarizing light which is obtained by causing the initial reading light 12 to reflect at right angle by the polarizing beam splitter 15, which allows to obtain lights passing through the polarizing beam splitter 15.

In this spatial light modulator 1, the information image written in the photoconductive layer 4 diminishes as a time lapses because the alignment state of the liquid crystal molecules returns by itself to the initial state when the writing light is removed, i.e., utilizing reversible change of alignment of the liquid crystal molecules.

Table 2 shows exemplary physical conditions and experimental results of the second embodiment of the spatial light modulator 1 of the present invention regarding examples 5 of the embodiment 2 of the present invention together with the comparative example 2 of the prior art.

## Table 2

|  |  | (1)<br><br>d<br><br>($\mu$m) | (2)<br><br>$\Delta$n | (3)<br><br>$\Delta\varepsilon$ | (4)<br><br>θ1<br><br>( ˙ ) | (5)<br><br>θ2<br><br>( ˙ ) | (6)<br><br>$\phi$<br><br>( ˙ ) | (7)<br><br>$\psi$<br><br>( ˙ ) | (8)<br>App.<br>Vol.<br>(v) | (9)<br>Res.<br>Time<br>(ms) | (10)<br><br>Fig. |
|---|---|---|---|---|---|---|---|---|---|---|---|
| Com. | 2 | 3.0 | 0.180 | 8.0 | 2.0 | 2.0 | 45.0 | 0 | 2.08 | 32 | 3(B) |
| Emb.<br>Ex. | 2<br>5 | 3.0 | 0.225 | 8.0 | 88.0 | 2.0 | 45.0 | 0 | 1.33 | 11 | 15 |

Wherein (1)-(10) denote as follows:

(1) thickness (d) of the liquid crystal layer ($\mu$m)
(2) anisotropy of the refractive index of liquid crystal molecule ($\Delta$n)
(3) anisotropy of dielectricity of the liquid crystal molecule ($\Delta\varepsilon$)
(4) tilt angle θ1 (degree) of the first liquid crystal molecules 7a on the transparent substrate 2a
(5) tilt angle θ2 (degree) of the second liquid crystal molecules 7a on the transparent substrate 2b
(6) twist angle $\psi$ (degree) of the liquid crystal molecules
(7) angel $\phi$ (degree) between the polarizing direction of the reading light and the aligning direction (long axis direction) of the first liquid crystal molecules 7a
(8) applied voltage (V) to the liquid crystal layer
(9) response time (ms) of the spatial light modulator
(10) corresponding Figures

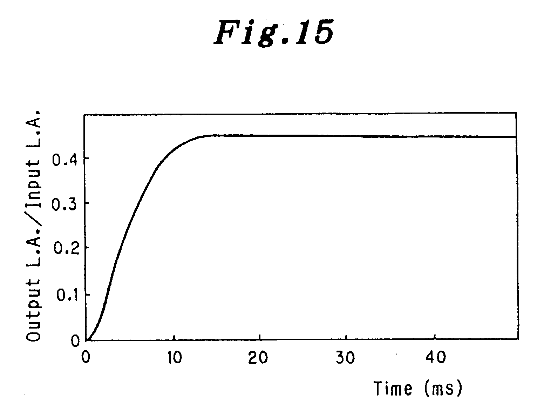

Fig. 15 is a graph showing a response characteristic of the second embodiment of the present invention when an electric field is applied to the spatial light modulator 1.

Referring to Fig. 15, the horizontal axis shows a time lapse and the vertical axis shows the ratio of an output light amount to the incident light amount as mentioned in Fig. 3.

As clearly understood from Fig. 15, the second embodiment of the spatial light modulator 1 of the present invention has a very high speed response characteristic because the required time lapse to obtain a maximum contrast ratio from the initial state, i.e., a writing time, is approximately 11 ms.

In the second embodiment, the description is given to an example in which liquid crystal molecules of the liquid crystal layer 7 have a helical structure of the twist angle $\phi$ in the counterclockwise direction, however, other example having a helical structure of the twist angle $\phi$ in the clockwise direction can be employed as well as the former example.

According to the present invention, the spatial light modulator has a high speed response characteristic, thus, it is advantageous when the spatial light modulator is used for displaying motion image pictures because of enabling to shorten a writing time of the light image therein.

While the presently preferred embodiments of the present invention have been shown and described, it is to be understood these disclosures are for the purpose of illustration and that various changes and modification may be made without departing from the scope of the invention as set forth in the appended claims.

## Claims

1. A spatial light modulator (1) comprising:

   a liquid crystal layer (7) interposed between a first (6a) and second (6b) liquid crystal aligning layer;
   a light reflecting layer (5) and a photoconductive layer (4) provided on the outside of the second liquid crystal aligning layer (6b) in this order;
   a pair of transparent electrodes (3a, 3b) opposing parallel each other provided on the outside of the first liquid crystal aligning layer (6a) and the photoconductive layer (4) respectively;
   a pair of transparent substrates (2a, 2b) opposing parallel each other provided at outsides of the pair of transparent electrodes respectively;
   a first group of liquid crystal molecules (7a) in the liquid crystal layer disposed adjacent to the first liquid crystal aligning layer with their long-axes parallel to each other;
   a second group of liquid crystal molecules (7b) in the liquid crystal layer disposed adjacent to the second liquid crystal aligning layer with their long-axes parallel to each other, the photoconductive layer being arranged to be irradiated by a writing light (11) carrying an image information through one of the transparent electrodes (3b) for writing the image information thereon, the liquid crystal layer being arranged to be irradiated by a polarized reading light (12) having a polarizing direction (X) through the other (3a) of the transparent electrodes and the first liquid crystal aligning layer (6a) for reading out the image information, the light reflecting layer (5) reflecting the polarized reading light projected out of the liquid crystal layer,
   wherein
   the first group of the liquid crystal molecules (7a) is aligned in such a manner that the aligning direction on the first aligning layer (6a) intersects, at an angle ($\phi$) defined within the range of 30° ~ 60°, the polarizing direction (X) of the polarized reading light;
   the liquid crystal layer has a value of $\Delta n \cdot d$ within the range of 0.45~0.75 $\mu$m, where "$\Delta n$" and "d" respectively designates the anisotropy of birefringence of the liquid crystal layer and the thickness of the liquid crystal layer;
   one of the first and second groups cf the liquid crystal molecules makes a tilt angle ($\theta_1$) to the transparent substrates within the range of 0°~10° and the other thereof makes a tilt angle ($\theta_2$) thereto within the range of 80°~90°; and
   the aligning directions on the first and second aligning layers are parallel to each other.

2. A spatial light modulator (1) comprising:

   a liquid crystal layer interposed (7) between a first (6a) and second (6b) liquid crystal aligning layer;
   a light reflecting layer (5) and a photoconductive layer (4) being provided on the outside of the second liquid crystal aligning layer (6b) in this order;
   a pair of transparent electrodes (3a, 3b) opposing parallel each other provided on the outside of the first liquid crystal aligning layer (6a) and the photoconductive layer (4) respectively;
   a pair of transparent substrates (2a, 2b) opposing parallel each other provided on the outsides of the pair of transparent electrodes respectively;
   a first group of liquid crystal molecules (7a) in the liquid crystal layer (7) disposed adjacent to the first liquid crystal aligning layer with their long-axes parallel to each other;
a second group of liquid crystal molecules (7b) in the liquid crystal layer (7) disposed adjacent to the second liquid crystal aligning layer with their long-axes parallel to each other, the photoconductive layer being arranged to be irradiated by a writing light (11) carrying an image information through one of the transparent electrodes (3b) for writing the image information thereon, the liquid crystal layer being arranged to be irradiated by a polarized reading light having a polarizing direction (X) through the other (3a) of the transparent electrodes and the first liquid crystal aligning layer (6a) for reading out the image information, the light reflecting layer reflecting the polarized reading light projected out of the liquid crystal layer,
wherein

the first group of the liquid crystal molecules (7a) is aligned in such a manner that the aligning direction on the aligning layer (6a) intersects, at an angle ($\phi$) defined within the range of $0° \sim \pm 5°$ or $90° \sim \pm 5°$, the polarizing direction (X) of the polarized reading light;
the liquid crystal layer has a value of $\Delta n \cdot d$ within the range of $0.45 \sim 0.75$ μm, where "$\Delta n$" and "d" respectively designates the anisotropy of birefringence and the thickness of the liquid crystal layer;
one of the first and second group of the liquid crystal molecules makes a tilt angle ($\theta_1$) to the transparent substrates within the range of $80° \sim 90°$ and the other thereof makes a tilt angle ($\theta_2$) thereto within the range of $0° \sim 10°$; and
the liquid crystal layer has a twisted structure in the direction of the thickness thereof having a twist angle ($\psi$) within the range of $40° \sim 50°$.

## Patentansprüche

1.  Räumlicher Lichtmodulator (1), der aufweist:

    eine Flüssigkristallage (7), die zwischen eine erste (6a) und zweite (6b) Flüssigkristallorientierungslage gelegt ist;
    eine Lichtreflexionslage (5) und eine photoleitende Lage (4), die auf der Außenseite der zweiten Flüssigkristallorientierungslage (6b) in dieser Reihenfolge vorgesehen sind;
    ein Paar einander parallel gegenüberliegende, transparente Elektroden (3a, 3b), die jeweils auf der Außenseite der ersten Flüssigkristallorientierungslage (6a) und der photoleitenden Lage (4) vorgesehen sind;
    ein Paar transparente Substrate (2a, 2b), die einander parallel gegenüberliegend jeweils auf den Außenseiten der transparenten Elektroden vorgesehen sind;
    eine erste Gruppe von Flüssigkristallmolekülen (7a) in der Flüssigkristallage, welche mit ihren Längsachsen parallel zueinander anschließend an die erste Flüssigkristallorientierungslage angeordnet sind;
    eine zweite Gruppe von Flüssigkristallmolekülen (7b) in der Flüssigkristallage, die anschließend an die zweite Flüssigkristallorientierungslage mit ihren Längsachsen parallel zueinander angeordnet sind, wobei die photoleitende Lage so angeordnet ist, daß sie von einem eine Bildinformation tragenden Schreiblicht durch eine der transparenten Elektroden (3b) bestrahlbar ist, um die Bildinformation darauf zu schreiben, die Flüssigristallage so angeordnet ist, daß sie von einem polarisierten Leselicht (12) bestrahlbar ist, dessen Polarisationsrichtung (x) durch die andere (3a) transparente Elektrode und die erste Flüssigkristallrientierungslage (6a) geht, um die Bildinformation zu lesen, die Lichtreflexionslage (5) das aus der Flüssigkristallage projizierte Leselicht reflektiert,
    die erste Gruppe der Flüssigkristallmoleküle (7a) derart ausgerichtet ist, daß die Orientierungsrichtung der ersten Orientierungslage (6a) die Polarisationsrichtung (x) des polarisierten Leselichts unter einem Winkel ($\phi$) schneidet, der im Bereich von $30° \text{-} 60°$ definiert ist;
    der Wert $\Delta n \cdot d$ der Flüssigkristallage im Bereich von $0,45 \text{-} 0,75$ μm liegt, wobei "$\Delta n$" und "d" jeweils die Anisotropie der Doppelbrechung der Flüssigkristallage und die Dicke derselben angeben;
    die erste oder die zweite Gruppe der Flüssigkristallmoleküle einen spitzen Winkel ($\theta_1$) zu den transparenten Substraten im Bereich von $0° \text{-} 10°$ und die andere Gruppe der Flüssigkristallmoleküle dazu einen spitzen Winkel ($\theta_2$) im Bereich von $80° \text{-} 90°$ einnehmen; und
    die Orientierungsrichtungen der ersten und zweiten Orientierungslage parallel zueinander sind.

2.  Räumlicher Lichtmodulator (1), der aufweist:

    eine zwischen eine erste (6a) und eine zweite (6b) Flüssigkristallorientierungslage eingelegte Flüssigkristallage;
    eine Lichtreflexionslage (5) und eine photoleitende Lage (4), die in dieser Reihenfolge auf der Außenseite der zweiten Flüssigkristallorientierungslage (6b) vorgesehen sind;

ein Paar einander parallel gegenüberliegende transparente Elektroden (3a, 3b), die jeweils auf der Außenseite der ersten Flüssigkristallorientierungslage (6a) und der photoleitenden Lage (4) vorgesehen sind;

ein Paar einander parallel gegenüberliegende transparente Substrate (2a, 2b), die jeweils auf den Außenseiten der beiden transparenten Elektroden vorgesehen sind;

eine erste Gruppe aus Flüssigkristallmolekülen (7a) in der Flüssigkristallage, welche anschließend an die erste Flüssigkristallorientierungslage mit ihren Längsachsen parallel zueinander angeordnet sind;

eine zweite Gruppe aus Flüssigkristallmolekülen (7b) in der Flüssigkristallage, welche benachbart zur zweiten Flüssigkristallorientierungslage mit ihren Längsachsen parallel zueinander angeordnet sind, wobei

die photoleitende Lage so angeordnet ist, daß sie durch eine der transparenten Elektroden (5b) von einem eine Bildinformation tragenden Schreiblicht (11) bestrahlbar ist, um die Bildinformation darauf zu schreiben, die Flüssigkristallage so angeordnet ist, daß sie von einem polarisierten Leselicht bestrahlbar ist, dessen Polarisationsrichtung (x) durch die andere (3a) der transparenten Elektroden und die erste FlüssigkristallOrientierungslage (6a) geht, um die Bildinformation zu lesen, wobei die Lichtreflexionslage (5) das von der Flüssigkristallage projizierte polarisierte Leselicht reflektiert,

die erste Gruppe aus Flüssigkristallmolekülen (7a) derart orientiert ist, daß die Orientierungsrichtung in der Orientierungslage (6a) die Polarisationsrichtung (x) des polarisierten Leselichts unter einem in einem Bereich von 0°-±6° oder 90°-±5° definierten Winkel (φ) schneidet;

der Wert Δn·d der Flüssigkristallage im Bereich von 0,45-0,75 μm liegt, wobei "Δn" und "d" jeweils die Anisotropie der Doppelbrechung und die Dicke der Flüssigkristallage angeben;

die erste oder zweite Gruppe der Flüssigkristallmoleküle zu den transparenten Substraten einen spitzen Winkel ($\theta_1$) im Bereich von 80°-90° und die andere Gruppe dazu ebenfalls einen spitzen Winkel ($\theta_2$) innerhalb des Bereichs von 0°-10° bilden; und

die Flüssigkristallage (5) eine verdrehte Struktur in ihrer Dickenrichtung mit einem Drehungswinkel (Ψ) im Bereich von 40°-50° hat.

## Revendications

1. Un modulateur spatial de lumière (1) comprenant:

   - une couche (7) à cristaux liquides interposée entre une première couche (6a) d'alignement à cristaux liquides et une deuxième couche (6b) d'alignement à cristaux liquides;
   - une couche (5) réfléchissant la lumière et une couche (4) photo-conductrice prévues dans ce même ordre à l'extérieur de la deuxième couche d'alignement à cristaux liquides;
   - une paire d'électrodes transparentes (3a, 3b) opposées et parallèles l'une à l'autre, à l'extérieur respectivement de la première couche d'alignement à cristaux liquides (6a) et, de la couche photoconductrice (4);
   - une paire de substrats transparents (2a, 2b) opposés et parallèles l'un à l'autre, prévus respectivement à l'extérieur de la paire d'électrodes transparentes;
   - un premier groupe de molécules de cristaux liquides (7a) dans la couche de cristaux liquides disposées avec leurs axes longitudinaux parallèles l'un à l'autre, adjacentes à la première couche d'alignement à cristaux liquides;
   - un deuxième groupe de molécules des cristaux liquides (7b) dans la couche à cristaux liquides, disposées avec leurs axes longitudinaux parallèles l'un à l'autre, adjacentes à la deuxième couche d'alignement à cristaux liquides, la couche photoconductrice étant agencée pour être irradiée par une lumière d'inscription (11) transportant de l'information d'image à travers l'une des électrodes transparentes (3b) pour écrire l'information en forme d'image sur cette couche, la couche à cristaux liquides étant agencée pour être irradiée par une lumière de lecture polarisée (12) présentant une direction de polarisation (X) à travers l'autre (3a) électrode transparente ainsi qu'à travers la première couche d'alignement à cristaux liquides (6a) pour lire l'information d'image, la couche réfléchissant la lumière (5) réfléchissant la lumière de lecture polarisée qui est projetée hors de la couche à cristaux liquides; dans lequel

   - le premier groupe de molécules de cristaux liquides (7a) est aligné, de sorte que la direction d'alignement sur la première couche d'alignement (6a) coupe sous un angle (φ) défini dans la gamme de 30 à 60°, la direction de polarisation (X) de la lumière de lecture polarisée;
   - la couche à cristaux liquides présente une valeur Δn.d de l'ordre de 0,45≈0,75 μm, dans lequel "Δn" et "d" représentent respectivement l'anisotropie de la biréfringence de la couche à cristaux liquides et l'épaisseur de la couche à cristaux liquides;

- un parmi le premier et le deuxième groupes de molécule de cristaux liquides présente un angle d'inclinaison ($\phi_1$) par rapport aux substrats transparents de l'ordre de 0 à ≈ 10° et l'autre groupe présente un angle d'inclinaison ($\phi_2$) par rapport au substrat compris dans la gamme de 80° à ≈ 90°; et
- les directions d'alignement de la première et de la deuxième couches d'alignement sont parallèles l'une à l'autre.

2. Un modulateur spatial de lumière (1) comprenant:

- une couche (7) à cristaux liquides interposée entre une première couche (6a) d'alignement à cristaux liquides et une deuxième couche (6b) d'alignement à cristaux liquides;
- une couche (5) réfléchissant la lumière et une couche (4) photo-conductrice prévues dans ce même ordre à l'extérieur de la deuxième couche d'alignement à cristaux liquides;
- une paire d'électrodes transparentes (3a, 3b) opposées et parallèles l'une à l'autre, à l'extérieur respectivement de la première couche d'alignement à cristaux liquides (6a) et de, la couche photoconductrice (4);
- une paire de substrats transparents (2a, 2b) opposés et parallèles l'un à l'autre, prévus respectivement à l'extérieur de la paire d'électrodes transparentes;
- un premier groupe de molécules de cristaux liquides (7a) dans la couche de cristaux liquides disposées avec leurs axes principaux parallèles l'un à l'autre, adjacents à la première couche d'alignement des cristaux liquides;
- un deuxième groupe de molécules des cristaux liquides (7b) dans la couche à cristaux liquides (7), disposées avec leurs axes longitudinaux parallèles l'un à l'autre, adjacentes à la deuxième couche d'alignement à cristaux liquides, la couche photoconductrice étant agencée pour être irradiée par une lumière d'inscription (11) transportant de l'information d'image à travers l'une des électrodes transparentes (3b) pour écrire l'information en forme d'image sur cette couche, la souche à cristaux liquides étant agencée pour être irradiée par une lumière de lecture polarisée (12) présentant une direction de polarisation (X) à travers l'autre (3a) électrode transparente ainsi qu'à travers la première couche d'alignement à cristaux liquides (6a) pour lire l'information d'image, la couche réfléchissant la lumière (5) réfléchissant la lumière de lecture polarisée qui est projetée hors de la couche cristaux liquides; dans lequel

- le premier groupe de molécules de cristaux liquides (7a) est aligné de sorte que la direction d'alignement sur la couche d'alignement (6a) coupe sous un angle ($\phi$) de l'ordre de 0° à ± 5° ou de -90° à ± 5° la direction de polarisation (X) de la lumière de la lumière polarisée de lecture;
- la première couche de cristaux liquides présente une valeur de "$\Delta n$", d de l'ordre de 0,45 à ≈ 0.75 $\mu$m, où "$\Delta n$" et "d" représentent respectivement l'anisotropie de la biréfringence et, l'épaisseur de la couche de cristaux liquides;
- l'un parmi le premier et le deuxième groupes de molécules à cristaux liquides fait un angle d'inclinaison ($\phi_1$) par rapport aux substrats transparents compris dans la gamme de 80° à 90° et l'autre groupe fait un angle d'inclinaison ($\phi_2$) par rapport au substrat compris dans la gamme d'environ 0° à 10°; et
- la couche à cristaux liquides présente une structure à déformation par torsion, selon la direction de son épaisseur, présentant un angle de torsion ($\psi$) compris dans la gamme de 40° à 50°.

*Fig.1*

# Fig.2
## PRIOR ART

*Fig.3 (A)*
*PRIOR ART*

*Fig.3 (B)*
*PRIOR ART*

# Fig.4

# Fig.5 (A)

# Fig.5 (B)

$\psi\ (30°\sim 60°)$

$\phi\ (0°)$

# $Fig.6$ ($A$)

# $Fig.6$ ($B$)

## Fig.7

Angle $\psi$ Between Polarizing Direction of Reading Light
and Aligning Direction of First Liquid Crystal Molecules (7a).

## Fig.8

## Fig.9

# Fig.10 (A)

# Fig.10 (B)

# *Fig.11 (A)*

# *Fig.11 (B)*

## Fig.12

EP 0 600 541 B1

## Fig.13

Angle ψ Between Polarizing Direction of Reading Light
and Aligning Direction of First Liquid Crystal Molecules (7a).

## Fig.14

Δn·d (μm)

28

# Fig.15